# EUROPEAN PATENT APPLICATION

(11) **EP 3 238 584 A1**
(43) Date of publication of application: **01.11.2017**
(21) Application number: 17163678.0
(22) Date of filing: 29.03.2017
(51) Int. Cl.: A47J 43/046, A47J 43/07, A47J 43/08

(54) **CUTTER DEVICE FOR A MIXER**

(30) Priority: 13.04.2016 CN 201610226835
(71) Applicant: Lee, Wen-Ching, Taichung City 408 (TW)
(72) Inventor: Lee, Wen-Ching, Taichung City 408 (TW)
(74) Representative: Becker Kurig Straus

(57) **Abstract**

A cutter device (10,30) of jar includes a shell (14,34) defining a top (141,341), a bottom (142) and an accommodation chamber (143), a drive shaft (22,42) inserted through the top (141,341) and bottom (142) of the shell (14,34), one or multiple blades (12) mounted onto the drive shaft (22,42) and located on the top (141,341) of the shell (14,34), a first oil seal (15) mounted into the accommodation chamber (143) of the shell (14,34) near the top (141,341) of the shell (14,34) and abutted against the periphery of the drive shaft (22,42), one or multiple bearings (18, 20) mounted into the accommodation chamber (143) of shell (14,34) and connected to the shell (14,34) and the drive shaft (22,42), and a second oil seal (21,41) mounted into the accommodation chamber (143) of the shell (14,34) near the bottom (142) of the shell (14,34) and abutted against the periphery of the drive shaft (22,42).

## Description

### BACKGROUND OF THE INVENTION

### 1. Field of the Invention

The present invention relates to food processor technology and more particularly, to a cutter device for mount into a jar.

### 2. Description of the Related Art

In order to prevent fluid in the jar from permeating through gaps in the cutter device into the motor base to cause motor damage during a high speed operation of the cutter device of the food processor or juicer, a cutter device sealing arrangement is necessary. Taiwan Patent M381361 discloses a cutter device leak-proof design for juicer. This design teaches the use of a leak-proof sleeve to prohibit fluid in the jar from flowing along the drive shaft into the motor in the motor base.

Further, a bearing needs to be lubricated for smooth rotation. However, in order to prohibit leakage of the lubricating grease of a bearing in a cutter device of a food processor or the like, an oil seal is usually mounted at a top side of the bearing inside the cutter device to prevent a grease leakage that can shorten the service life of the cutter device.

However, when washing the mixing cut with running water, in addition to cleaning the inside of the jar, the jar will be held upside down for enabling the running water to clean the bottom of the cutter device of the jar. At this time, the running water can permeate through the bottom of the cutter device into the inside of the cutter device to force the lubricating grease out of the bearing, affecting further rotating smoothness of the drive shaft.

Further, when the jar of a food processor is placed in horizontal, dust or other debris can fly into the inside of the cutter device, leading to quick wear of the bearing of the cutter device and affecting the service life of the bearing and the cutter device.

### SUMMARY OF THE INVENTION

The present invention has been accomplished under the circumstances in view. It is therefore the main object of the present invention to provide a cutter device of jar, which effectively prevents water, dust or other debris from permeating into the inside.

To achieve this and other objects of the present invention, a cutter device comprises a shell, a drive shaft, a blade, a first oil seal, a bearing and a second oil seal. The shell defines a top, a bottom and an accommodation chamber. The drive shaft is inserted through the top and bottom of the shell. The blade is located on the top of the shell and mounted onto the drive shaft. The first oil seal is mounted into the accommodation chamber of the shell and abutted against the periphery of the drive shaft. The first oil seal is disposed adjacent to the top of the shell. The bearing is mounted into the accommodation chamber of the shell and connected to the shell and the drive shaft. The second oil seal is mounted into the accommodation chamber of the shell and abutted against the periphery of the drive shaft. The second oil seal is disposed adjacent to the bottom of the shell.

Thus, when the jar is placed in horizontal or is being washed with water, the second oil seal prevents water, dust or other debris from entering the shell, thereby prolonging the service life of the cutter device.

Other advantages and features of the present invention will be fully understood by reference to the following specification in conjunction with the accompanying drawings, in which like reference signs denote like components of structure.

### BRIEF DESCRIPTION OF THE DRAWINGS

FIG. 1 is an exploded view of a cutter device for a jar of a food blender in accordance with a first embodiment of the present invention.
FIG. 2 is a sectional assembly view of the first embodiment of the present invention where the cap nut, the two blades and the first gasket ring are not shown.
FIG. 3 is a sectional assembly view of the second embodiment of the present invention where the cap nut, the blades and the first gasket ring are not shown.

### DETAILED DESCRIPTION OF THE INVENTION

A preferred embodiment of a cutter device of a jar in accordance with the present invention is described hereinafter in conjunction with the annexed drawings. However, the components, dimension and outer appearance illustrated in the annexed drawings are simply for illustration purpose only but not intended to limit the technical features of the present invention.

A food processor, juicer or food blender generally comprises a motor base and ajar. The jar has a cutter device mounted therein. After installation of the jar in the motor base, the motor in the motor base can be started up to rotate the drive shaft of the cutter device, forcing blades to mix, chop or crush foods in the jar. The above is the basic structure of the food processor, juicer or food blender, and is well known in the art, and therefore, we do not repeat them.

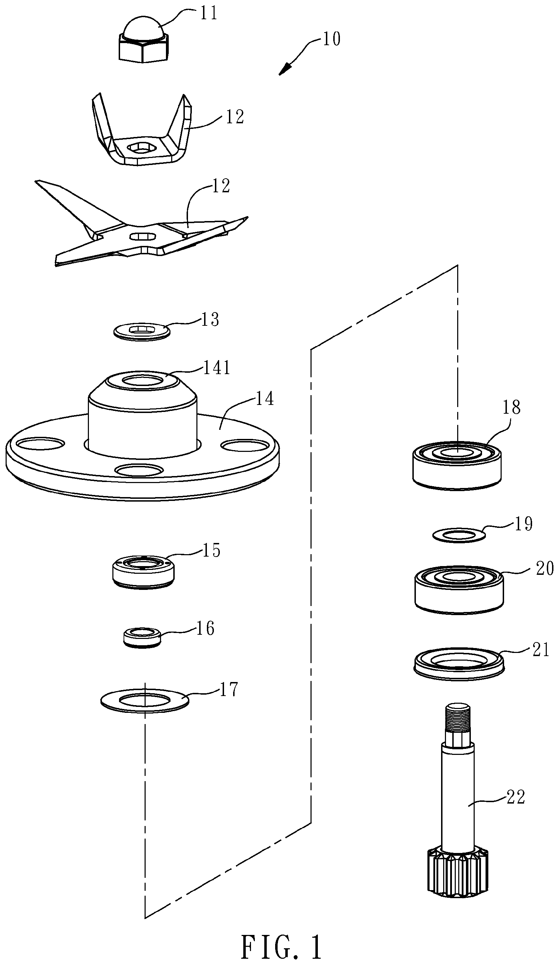

As illustrated in FIG. 1, a cutter device **10** for mount into ajar of a food blender in accordance with a first embodiment of the present invention is shown. The cutter device **10** comprises a cap nut **11**, two blades **12**, a first gasket ring **13**, a shell **14**, a first oil seal **15**, a collar **16**, a second gasket ring **17**, a first bearing **18**, a third gasket ring **19**, a second bearing **20**, a second oil seal **21** and a drive shaft **22**.

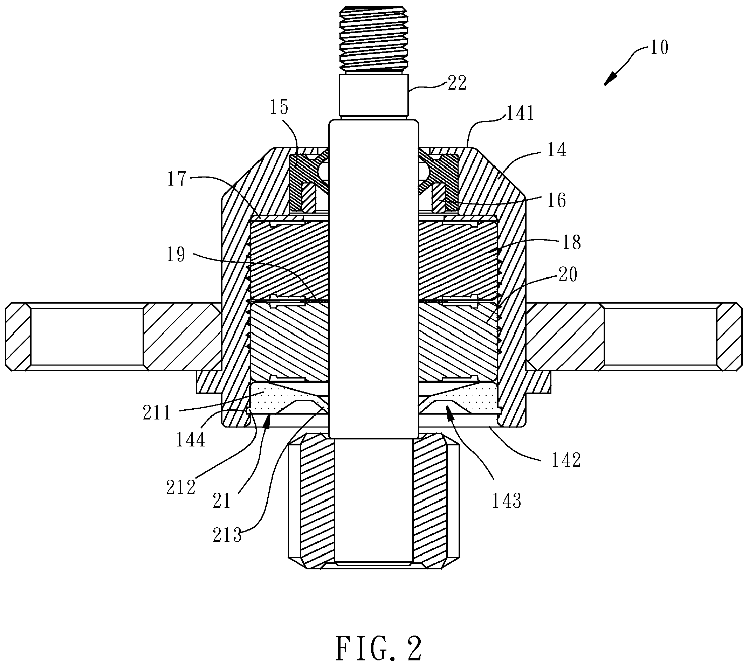

As illustrated in FIG. 2, the shell **14** defines a top **141**, a bottom **142** and an accommodation chamber **143**. The drive shaft **22** is inserted through the top **141** and bottom **142** of the shell **14** with a part thereof suspending in the accommodation chamber **143** of the shell **14**. The first oil seal **15** is mount into the accommodation chamber **143** the shell **14** and near the top **141** with the inner perimeter thereof closely abutted against the periphery of the drive shaft **22**. The first oil seal **15** is tightly squeezed in between the shell **14** and the drive shaft **22**. The collar **16** is attached to the first oil seal **15** and mounted into the accommodation chamber **143** of the shell **14**. The second gasket ring **17** is mounted between the first oil seal **15** and the first bearing **18** and disposed inside the accommodation chamber **143** of the shell **14**. The third gasket ring **19** is mounted between the first bearing **18** and the second bearing **20** and disposed inside the accommodation chamber **143** of the shell **14**. The first and second bearings **18,20** are respectively connected to the shell **14** and the drive shaft **22**, and disposed inside the accommodation chamber **143** of the shell **14**. The second oil seal **21** is mounted into the accommodation chamber **143** of the shell **14** and tightly abutted against the periphery of the drive shaft **22**. The second oil seal **21** is disposed near the bottom **142** of the shell **14**. In other words, the drive shaft **22** is inserted through the first oil seal **15**, the collar **16**, the second gasket ring **17**, the first bearing **18**, the third gasket ring **19**, the second bearing **20** and the second oil seal **21**.

Referring to FIG. 1 again, the cap nut **11**, the two blades **12** and the first gasket ring **13** are downwardly fastened to the drive shaft **22** and supported on the top **141** of the shell **14**. The combination of the cap nut **11**, the blades **12** and the first gasket ring **13** is a known technique to any person skilled in the art, we do not repeat them herein. Further, the number and shape of blades **12** are not limited to what are shown in the drawings. The number of the bearings **18**,**20** and the number of the gasket rings **13**,**17**,**19** are also not limited to 2 as described in the present preferred embodiment. In the present preferred embodiment, the bearings are used to support rotation of the drive shaft, however, other equivalent devices can also be selected used to achieve the same effect, and therefore the use of the ball bearing is not a limitation.

Due to the arrangement of the second oil seal 21 at the bottom side of the second bearing **20**, the second oil seal **21** effectively prohibits external water dust or other debris from entering the cutter device **10**, avoiding leakage of the lubricating grease of the bearings **18**,**20** and prolonging the service life of the cutter device **10**.

Referring to FIG. 2 again, the shell **14** comprises a retaining groove **144** extending around an inside wall thereof and facing toward the accommodation chamber **143**. The second oil seal **21** comprises a body **211**, a flange **212** and a first free segment **213**. The flange **212** is protruded from the body **211** and engaged into the retaining groove **144** of the shell **14** to secure the body **211** firmly to the shell **14**. The first free segment **213** extends from the body **211** with the terminal end thereof firmly abutted against the periphery of the drive shaft **22**. In the present preferred embodiment, the first free segment **213** extends in direction toward the bottom **142** of the shell **14**, thus, when the jar stands upside down, the terminal end of the first free segment **213** faces upward, avoiding water, dust or other debris from entering the shell **14**.

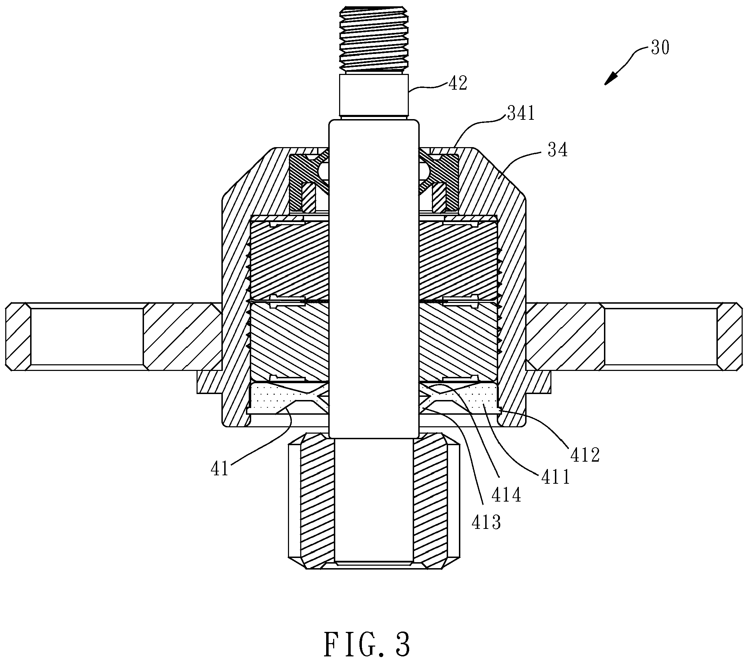

Referring to FIG. 3, a cutter device **30** for a jar of a food blender in accordance with a second embodiment of the present invention is shown. The second oil seal **41** of the cutter device **30** of this second embodiment comprises a body **411**, a flange **412**, a first free segment **413** and a second free segment **414**. The body **411**, the flange **412** and the first free segment **413** are same as the like components in the aforesaid first embodiment, and thus, we do not repeat them. The second free segment **414** extends from the body **411** with the terminal end thereof abutted against the periphery of the drive shaft **42**. Further, the second free segment **414** extends in direction toward the top **341** of the shell **34**, thus, when the jar stands upside down, the terminal end of the first free segment **213** prevents water, dust or other debris from entering the shell **34**, the second free segment **414** prevents water, dust or other debris that permeated through the first free segment **413** from entering the shell **34**. In short, the second oil seal **41** of this second embodiment provides a waterproofing structure better than the aforesaid first embodiment.

In the aforesaid two embodiments, the second oil seal is configured to provide one or two free segments, however, in actual application, the number of the free segments can be more than 2, and therefore, the number of 1 or 2 is not a limitation.

Further, the present invention has been made in order to solve the problem that when the j ar is being held upside down or washed with water, washing water can permeate into the inside of the cutter device to shorten the service life of the cutter device so that the arrangement of oil sealing means at the bottom of the shell bottom of the cutter device should be within the scope of protection of the invention, therefore, the mounting position and oil seal structure are not limited to those described in the drawings and specification of the present invention.

Although particular embodiments of the invention have been described in detail for purposes of illustration, various modifications and enhancements may be made without departing from the spirit and scope of the invention. Accordingly, the invention is not to be limited except as by the appended claims.

## Claims

1. A cutter device (10,30) mounted into a jar, comprising a shell (14,34) defining a top (141,341), a bottom (142) and an accommodation chamber (143); a drive shaft (22,42) inserted through said top (141,341) and said bottom (142) of said shell (14,34); a blade (12) located on said top (141,341) of said shell (14,34) and mounted onto said drive shaft (22,42); a first oil seal (15) mounted into said accommodation chamber (143) of said shell (14,34) and abutted against the periphery of said drive shaft (22,42), said first oil seal (15) being disposed adjacent to said top (141,341) of said shell (14,34); and a bearing (18,20) mounted into said accommodation chamber (143) of shell (14,34) and connected to said shell (14,34) and said drive shaft (22,42); said cutter device (10,30) being **characterized in that**:
a second oil seal (21,41) mounted into said accommodation chamber (143) of said shell (14,34) and abutted against the periphery of said drive shaft (22,42), said second oil seal (21,41) being disposed adjacent to said bottom (142) of said shell (14,34).

2. The cutter device (10,30) as claimed in claim 1, wherein said second oil seal (21,41) comprises a body (211,411) and a first free segment (213,413), said body (211,411) being fixedly mounted at said shell (14,34), said first free segment (213,413) being extended from said body (211,411) to said drive shaft (22,42) and having a terminal end thereof abutted against the periphery of said drive shaft (22,42).

3. The cutter device (10,30) as claimed in claim 2, wherein said first free segment (213,413) extends from said body (211,411) in direction toward said bottom (142) of said shell (14,34).

4. The cutter device (10,30) as claimed in claim 2, wherein said second oil seal (21,41) further comprises a second free segment (414) extended from said body (211,411) to said drive shaft (22,42) and having a terminal end thereof abutted against the periphery of said drive shaft (22,42).

5. The cutter device (10,30) as claimed in claim 4, wherein said first free segment (213,413) extends from said body (211,411) in direction toward said bottom (142) of said shell (14,34); said second free segment (414) extends from said body (211,411) in direction toward said top (141,341) of said shell (14,34).

6. The cutter device (10,30) as claimed in claim 4 wherein said shell (14,34) further defines a retaining groove (144) extending around an inside wall thereof to face toward said accommodation chamber (143); said second oil seal (21,41) further comprises a flange (212,412) protruded from said body (211,411) and engaged into said retaining groove (144) of said shell (14,34).
